# EUROPEAN PATENT APPLICATION

(11) **EP 3 964 481 A1**
(43) Date of publication of application: **09.03.2022**
(21) Application number: 21195153.8
(22) Date of filing: 06.09.2021
(51) Int. Cl.: C01G 53/00, H01M 4/131, H01M 4/36, H01M 4/525

(54) **CATHODE ACTIVE MATERIAL FOR LITHIUM SECONDARY BATTERY, METHOD OF MANUFACTURING THE SAME AND LITHIUM SECONDARY BATTERY INCLUDING THE SAME**

(30) Priority: 07.09.2020 KR 20200114091
(71) Applicant: SK Innovation Co., Ltd., Seoul 03188 (KR)
(72) Inventor: PARK, Sung Soon, 34124 Daejeon (KR); KIM, Jik Soo, 34124 Daejeon (KR); CHOI, Ji Hoon, 34124 Daejeon (KR)
(74) Representative: Stolmár & Partner Patentanwälte PartG mbB

(57) **Abstract**

A cathode active material for a lithium secondary battery according to embodiments of the present invention includes a lithium composite oxide containing sodium, and a coating formed on the surface of the lithium composite oxide. The coating contains sodium and aluminum. Sodium is distributed to a depth of 35 nm or more from a surface of the cathode active material. Thus, electrical and thermal properties of a lithium secondary battery are improved.

## Description

### CROSS-REFERENCE TO RELATED APPLICATION AND CLAIM OF PRIORITY

This application claims priority to Korean Patent Application No. 10-2020-0114091 filed on September 7, 2020 in the Korean Intellectual Property Office (KIPO), the entire disclosure of which is incorporated by reference herein.

### BACKGROUND

### 1. Field

The present invention relates to a cathode active material, a method of manufacturing the same and a lithium secondary battery including the same. More particularly, the present invention relates to a lithium composite oxide-based cathode active material, a method of manufacturing the same and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is developed and applied to a power source of an eco-friendly vehicle such as a hybrid car.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

A lithium composite oxide may be used as an active material for a cathode of the lithium secondary battery, and high capacity, power and life-span properties are required in the cathode active material. Thus, the lithium composite oxide maintaining chemical stability even during repeated charging/discharging is needed.

However, when the lithium composite oxide is exposed to an atmosphere or is in contact with an electrolyte, by-products of lithium or nickel due to a side reaction may be generated on a surface of a lithium composite oxide particle. In this case, life-span and operational stability of the lithium secondary battery may be deteriorated.

Particularly, in a high nickel lithium composite oxide, a large amount of lithium impurities (LiOH, Li₂CO, etc.) are formed on the particle surface, which may cause deterioration of a battery performance. When the lithium impurities are washed with water, a specific surface area of the cathode active material increases and the side reactions with the electrolyte are activated, thereby deteriorating a stability of a surface structure.

For example, Korean Published Patent Application No. 10-2017-0093085 discloses a cathode active material including a transition metal compound and an ion adsorption binder, which may not provide sufficient stability of the cathode active material.

### SUMMARY

According to an aspect of the present invention, there is provided a cathode active material having improved stability and electrical property.

According to an aspect of the present invention, there is provided a method of manufacturing a cathode active material having improved stability and electrical property.

According to an aspect of the present invention, there is provided a lithium secondary battery having improved stability and electrical property.

According to exemplary embodiments of the present invention, a cathode active material for a lithium secondary battery includes a lithium composite oxide containing sodium, and a coating formed on the surface of the lithium composite oxide, the coating containing sodium and aluminum. Sodium is distributed to a depth of 35 nm or more from a surface of the cathode active material.

In some embodiments, an amount of sodium contained in the coating may be greater than an amount of sodium contained in the lithium composite oxide.

In some embodiments, sodium may be distributed to a depth of 35 nm to 200 nm from the surface of the cathode active material.

In some embodiments, the coating may further contain boron.

In some embodiments, the coating may include an aluminum-containing compound including at least one of an aluminum-containing oxide, an aluminum-containing hydroxide or a lithium-aluminum compound.

In some embodiments, the aluminum-containing compound may in include at least one selected from the group consisting of AlO, Al₂O, Al₂O₃, LiAlO₂, LiAlB₄, LiAlB₂O₅, Al(OH)₃, LiAlH₄ and LiAlOH.

In some embodiments, the coating may further include a boron-containing oxide.

In some embodiments, the boron-containing oxide may include LiBO₂, LiB3O5 or Li2B4O7.

In some embodiments, the coating may at least partially cover the surface of the lithium composite oxide.

In some embodiments, the coating may be discontinuously formed on the surface of the lithium composite oxide.

In some embodiments, the lithium composite oxide may include nickel, and a mole fraction of nickel in the lithium composite oxide may be 0.6 or more among elements other than lithium and oxygen.

In some embodiments, the lithium composite oxide may have an average particle diameter (D50) from 3 µm to 25 µm.

In some embodiments, the cathode active material may include aluminum, and aluminum may be distributed to a depth of 37 nm or more from the surface of the cathode active material.

In some embodiments, aluminum may be distributed to a depth of 37 nm to 200 nm from the surface of the cathode active material.

In a method of manufacturing a cathode active material for a lithium secondary battery according to exemplary embodiments of the present invention, an aqueous reaction solution containing a sodium-aluminum compound is prepared. A lithium composite oxide is wet-coated using the aqueous reaction solution.

In some embodiments, the sodium-aluminum compound may include sodium-aluminum oxide or sodium-aluminum hydroxide.

In some embodiments, in the wet-coating, a preliminary cathode active material may be formed by immersing a surface of the lithium composite oxide in the aqueous reaction solution. The preliminary cathode active material may be thermally treated.

In some embodiments, in the formation of the preliminary cathode active material, a boron-containing compound may be added to the aqueous reaction solution.

In some embodiments, the boron-containing compound may include boric acid.

In some embodiments, thermally treating the preliminary cathode active material may be performed at a temperature from 250°C to 700°C.

According to exemplary embodiments of the present invention, a lithium secondary battery includes a cathode including the cathode active material for a lithium secondary battery according to embodiments as described above, and an anode facing the cathode.

According to exemplary embodiments, the cathode active material for a lithium secondary battery includes an aluminum-containing coating on a surface of a lithium composite oxide. The aluminum-containing coating may have a sodium content greater than that in the lithium composite oxide. The aluminum-containing coating includes a large amount of aluminum, and a phase change in a surface structure of the cathode active material may be suppressed by aluminum having a fixed oxidation number. Further, aluminum may react with fluoride ions in an electrolyte to form an aluminum fluoride (AlF₃) coating. In this case, the surface structure of the cathode active material may be highly stabilized, and side reactions may be prevented.

For example, sodium contained in the lithium composite oxide may be distributed from the surface of the lithium composite oxide beyond a specific depth or more. In this case, a thermal stability of a secondary battery including the cathode active material that contains the lithium composite oxide may be further improved.

In some embodiments, boron may be contained in the coating, and boron may smoothly coat a surface of the cathode active material to reduce a specific surface area. In this case, side reactions with the electrolyte may be suppressed.

Accordingly, life-span and high temperature stability of the cathode active material and the secondary battery may be improved.

Additionally, a uniform coating may be effectively formed through a simplified wet coating process under a low temperature condition.

### BRIEF DESCRIPTION OF THE DRAWINGS

FIG. 1 is a schematic cross-sectional view illustrating a lithium secondary battery in accordance with exemplary embodiments exemplary embodiments.
FIG. 2 is a scanning electron microscopy (SEM) image of a surface of a cathode active material of a lithium secondary battery in accordance with exemplary embodiments.
FIG. 3 is a graph showing an elution amount of Na according to an etching time of cathode active material according to Example and Comparative Examples.
FIGS. 4 and 5 are graphs showing Na and Al contents according to an XPS etch depth of cathode active materials according to Example and Comparative Examples.
FIG. 6 is a graph showing cycle properties of lithium secondary batteries according to Example and Comparative Examples.

### DETAILED DESCRIPTION OF THE EMBODIMENTS

According to exemplary embodiments of the present invention, there is provided a cathode active material that includes a coating containing aluminum and sodium formed on a surface of a lithium composite oxide containing sodium. Further, a method of manufacturing the cathode active material is also provided.

According to exemplary embodiments of the present invention, a lithium secondary battery including the cathode active material is provided.

Hereinafter, the present invention will be described in detail with reference to the accompanying drawings. However, those skilled in the art will appreciate that such embodiments described with reference to the accompanying drawings are provided to further understand the spirit of the present invention and do not limit subject matters to be protected as disclosed in the detailed description and appended claims.

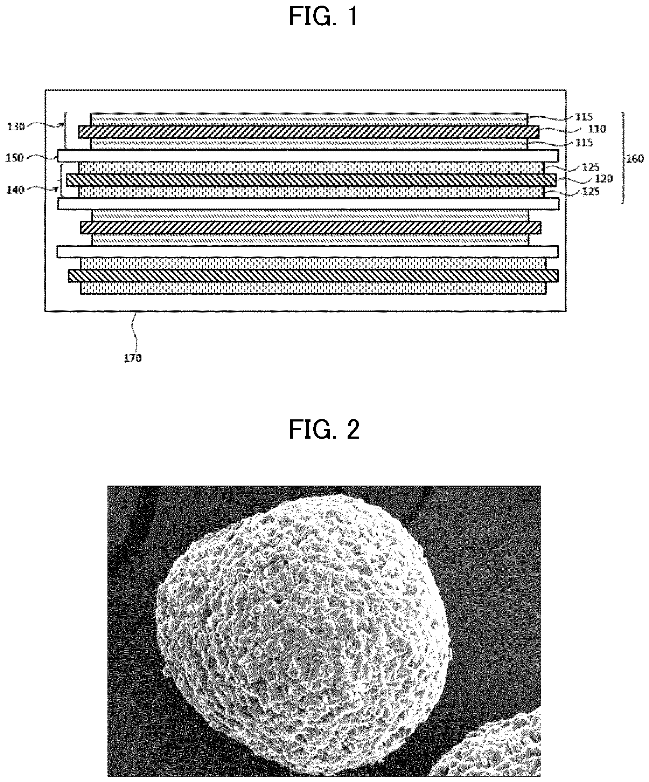

FIG. 1 is a schematic cross-sectional view illustrating a lithium secondary battery in accordance with exemplary embodiments exemplary embodiments.

Referring to FIG. 1, the lithium secondary battery may include a cathode 130, an anode 140 and a separation layer 150 interposed between the cathode and the anode.

The cathode 130 may include a cathode current collector 110 and a cathode active material layer 115 formed by coating a cathode active material on the cathode current collector 110 .

The cathode active material may include a lithium composite oxide and a lithium-aluminum-boron oxide formed on a surface of the lithium composite oxide.

The lithium composite oxide may include an oxide including lithium and other elements such as transition metals.

In exemplary embodiments, the lithium composite oxide may include nickel. Nickel may be included in an excess amount among elements except for lithium and oxygen of the lithium composite oxide.

As used herein, the term 'excess' indicates the largest mole fraction or content.

Nickel may serve as a metal related to a capacity of a lithium secondary battery. In exemplary embodiments, nickel may be included in the excess amount among the elements except for lithium and oxygen to improve the capacity of the secondary battery.

In exemplary embodiments, a mole fraction or a molar ratio of nickel among the elements except for lithium and oxygen of the lithium composite oxide may be about 0.6 or more.

In exemplary embodiments, the lithium composite oxide may be represented by Chemical Formula 1 below.

[Chemical Formula 1] Li_{α}Ni_{y}M_{z}O_{2-β}

In Chemical Formula 1, M is at least one selected from the group consisting of Co, Mn, Ti, Zr, Al and B, and 0.7≤α≤1.1, -0.1≤β≤0.5, 0.6≤y≤0.95, 0.95<y+z ≤1.1.

For example, as the content of nickel increases, the capacity and power of the lithium secondary battery may be improved. However, if the content of nickel is excessively increased, a life-span of the battery may decrease and mechanical and electrical stability may be degraded. For example, when the content of nickel is excessively increased, defects such as ignition and short circuit may not be sufficiently suppressed when a penetration by an external object occurs. Thus, according to exemplary embodiments, chemical and mechanical instability caused by nickel may be compensated by distributing manganese (Mn) throughout a particle.

Manganese (Mn) may serve as a metal related to mechanical and electrical stability of a lithium secondary battery. For example, manganese may suppress or reduce defects such as ignition and short circuit occurring when the cathode is penetrated by the external object to increase the life-span of the lithium secondary battery. Further, cobalt (Co) may serve as a metal related to a conductivity and a resistance of the lithium secondary battery.

If a mole fraction of nickel is less than 0.6, capacity and power of the battery may be excessively degraded. If the mole fraction of nickel exceeds 0.95, life-span and mechanical stability of the battery may be degraded.

In some embodiments, in Chemical Formula 1, M_{z} may be CoₐMn_{b}M'_{c}, M' may be at least one element selected from the group consisting of Ti, Zr, Al and B, and 0.05≤a≤0.2, 0.03≤b≤ 0.2, 0.95<y+a+b+c≤1.1. In this case, the compound represented by Chemical Formula 1 may be an NCM active material containing nickel, cobalt and manganese as main components, and may provide balanced properties in the power, capacity, life-span and stability.

Preferably, in Chemical Formula 1, 0.8≤y≤0.88, 0.09≤a≤0.1, and 0.03≤b≤0.1 may be adjusted. In this case, the capacity may be improved while maintaining the stability of the secondary battery.

In some embodiments, the lithium composite oxide may have a secondary particle structure formed by aggregation of primary particles (e.g., a grain of the compound of Chemical Formula 1). An average particle diameter (D₅₀) of the lithium composite oxide may be from about 6 µm to about 25 µm, preferably from about 10 µm to 16 µm.

The lithium composite oxide may contain sodium. Sodium contained in the lithium composite oxide may be derived from, e.g., sodium hydroxide provided as a pH adjusting agent or a precipitating agent used when forming the lithium composite oxide by a co-precipitation reaction. Sodium may be present between the primary particles of the lithium composite oxide.

For example, nickel components exposed on the surface of the lithium composite oxide may react with air or moisture to generate by-products. Further, nickel ions exposed to the surface may react with an electrolyte to cause a phase transition in a surface portion of the particle, and may transform a crystal structure.

In exemplary embodiments, a coating may be formed on the surface of the lithium composite oxide. The coating may contain sodium and aluminum.

For example, an oxidation number of Al is +3, and an ionic radius of Al may be similar to those of Ni Co, and Mn. Thus, a substitution with trivalent Ni, Co and Mn may be easily induced to be doped in a surface region of the lithium composite oxide.

Al has a fixed oxidation number of +3 to prevent a structural collapse due to a change in the oxidation number of the transition metal present on the surface of the lithium composite oxide during storage and use of the secondary battery. Further, Al may react with fluorine in the electrolyte of the secondary battery to form an AlF₃ coating. The AlF₃ coating may remarkably stabilize a surface structure of the cathode active material. Accordingly, life-span and high temperature stability of the secondary battery may be improved.

In exemplary embodiments, the coating may include an aluminum-containing compound. The aluminum-containing compound may include an aluminum-containing oxide, an aluminum-containing hydroxide and/or a lithium-aluminum compound.

The aluminum-containing compound may include at least one selected from the group consisting of AlO, Al₂O, Al₂O₃, LiAlO₂, LiAlB₄, LiAlB₂O₅, Al(OH)₃, LiAlH₄, and LiAlOH.

The aluminum-containing compound may be measured through ToF-SIMS, and may include a complete compound or a fragment of the compound.

An amount of sodium contained in the coating may be greater than an amount of sodium contained in the lithium composite oxide. For example, most of aluminum and sodium provided together as a coating source may be fixed to the surface of the lithium composite oxide particle and may not penetrate and diffuse into the lithium composite oxide particle. In this case, a large amount of aluminum may be present on the surface, so that stability of the lithium composite oxide may be improved.

In exemplary embodiments, the coating may further include boron. For example, a boron component may provide a smooth surface of the lithium composite oxide particle. The boron component may provide a substantially smooth surface by filling protrusions existing on the surface of the lithium composite oxide. In this case, a specific surface area of the cathode active material may be reduced, so that the side reaction with the electrolyte may be suppressed. Accordingly, life-span and storage properties of the cathode active material may be improved.

In exemplary embodiments, the coating may include a boron-containing oxide. For example, the boron-containing oxide may include LiBO₂, LiB₃O₅ and/or Li₂B₄O₇.

In some embodiments, the coating may at least partially cover the surface of the lithium composite oxide. For example, the coating may include particles or aggregates spaced apart from each other, and may discontinuously cover the surface of the lithium composite oxide. In some embodiments, the coating may completely cover the surface of the lithium composite oxide.

In some embodiments, aluminum and/or boron may be inserted and doped to a predetermined depth of the surface from the lithium composite oxide by the coating.

In an exemplary embodiment, a thickness of the coating may be defined as a region in which both sodium and aluminum are present from the surface of the cathode active material to a predetermined depth. For example, boron may be further included in the coating region in addition to sodium and aluminum.

For example, the thickness of the coating may be about from 50 nm to 500 nm. In the thickness range, lithium transfer ability may be maintained while the surface structure of the cathode active material may be protected.

In some embodiments, the cathode active material may include sodium, and sodium included in the cathode active material may be distributed to a depth of about 35 nm or more from the surface of the cathode active material.

For example, a distribution depth of sodium may be measured using atomic% of sodium according to an XPS etching depth through an X-ray photoelectron spectrometer (XPS) surface analysis. For example, the XPS surface analysis conditions may be adjusted as follows.
1) X-ray type: Source - Al Ka, Beam size 650 um
2) Depth profile conditions: Etch cycle 10s, Total etch levels 51 times
3) Al2p, Na1s spectrum analysis conditions at depth
   - Dwell time: 200 ms, Scan count: 30 times
   - Pass energy: 200eV, energy step: 0.1eV

Sodium included in the cathode active material may be defined to be distributed from the surface of the lithium composite oxide to a maximum depth in which the atomic% of sodium measured through the XPS exceeds 0%.

For example, within the above range of the distribution depth of sodium included in the cathode active material, thermal stability may be further improved by sodium distributed deeply in the cathode active material.

For example, the distribution depth of sodium included in the cathode active material may be controlled by an aluminum-containing compound and/or a boron-containing oxide to be described later. For example, sodium contained in the cathode active material may more easily penetrate into the cathode active material by the aluminum-containing compound and/or the boron-containing oxide. Accordingly, sodium included in the cathode active material may be more easily distributed from the surface of the cathode active material to the depth of about 35 nm or more.

For example, sodium included in the cathode active material may be distributed to a depth of about 37 nm or more from the surface of the cathode active material. Preferably, sodium contained in the positive active material may be distributed to a depth of about 40 nm or more from the surface of the positive active material.

For example, sodium included in the cathode active material may be distributed to a depth of about 200 nm or less from the surface of the cathode active material. Preferably, sodium included in the cathode active material may be distributed to a depth of about 140 nm or less from the surface of the cathode active material. More preferably, sodium included in the cathode active material may be distributed to a depth of about 80 nm or less from the surface of the cathode active material.

For example, if sodium is distributed from the surface of the cathode active material beyond the above depth range, a space in which lithium may move in the cathode active material may be decreased to degrade electrical properties of the cathode active material.

In some embodiments, the cathode active material may include aluminum, and aluminum included in the cathode active material may be distributed to a depth of about 37 nm or more from the surface of the cathode active material. For example, if aluminum is distributed from the surface of the cathode active material in the above depth range, life-span and electrical properties of the secondary battery including the cathode active material may be further improved.

For example, aluminum included in the cathode active material may be distributed to a depth of about 38 nm or more from the surface of the cathode active material. More preferably, aluminum included in the cathode active material may be distributed to a depth of about 40 nm or more from the surface of the cathode active material.

For example, aluminum included in the cathode active material may be distributed to a depth of about 200 nm or less from the surface of the cathode active material. Preferably, aluminum included in the cathode active material may be distributed to a depth of about 125 nm or less from the surface of the cathode active material. More preferably, aluminum included in the cathode active material may be distributed to about 50 nm or less from the surface of the cathode active material.

For example, if aluminum is distributed to a depth of about 200 nm or less from the surface of the cathode active material, sodium may be more deeply distributed from the surface of the cathode active material by aluminum. Further, thermal stability of the surface of the cathode active material may be improved by aluminum, and a surface side reaction with an electrolyte solution, etc., may be prevented.

Hereinafter, a method of manufacturing the cathode active material according to the above-described embodiments of the present invention will be described below.

According to exemplary embodiments, an aqueous reaction solution including a sodium (Na)-aluminum (Al) compound may be prepared. The sodium-aluminum compound may refer to a compound including both sodium and aluminum. The aqueous reaction solution may be provided as a wet coating solution of a lithium composite oxide.

For example, the sodium-aluminum compound may include a sodium-aluminum oxide or a sodium-aluminum hydroxide. The sodium-aluminum oxide may be water-soluble. The sodium-aluminum oxide may be easily dissolved in water at neutral condition (pH from about 6 to 8).

The sodium-aluminum compound may be adsorbed on the surface of the lithium composite oxide in an aqueous solution and then dried to form a coating material. In this case, a large amount of aluminum and sodium may be contained in the coating material, and an amount of sodium contained in the coating material may be greater than an amount of sodium contained in the lithium composite oxide.

The water-soluble sodium-aluminum oxide may include at least one of NaAlO₂, Na₂Al₂O₄, Na₅AlO₄, Na₇Al₃O₈, Na₁₇Al5O₁₆ and NaAl₁₁O₁₇.

The water-soluble sodium-aluminum hydroxide may include NaAl(OH)₄.

In some embodiments, an aluminum content in the sodium-aluminum compound may be from 0.01 wt% to 1 wt% based on a weight of the lithium composite oxide. Preferably, the aluminum content in the sodium-aluminum compound may be from 0.1 wt% to 1 wt%.

The lithium composite oxide may be wet-coated using the aqueous reaction solution.

The lithium composite oxide may be prepared by a method as will be described below.

In exemplary embodiments, active material metal salts may be prepared. The active material metal salts may include, e.g., a nickel salt, a manganese salt and a cobalt salt. Examples of the nickel salt may include nickel sulfate, nickel hydroxide, nickel nitrate, nickel acetate and a hydrate thereof. Examples of the manganese salt may include manganese sulfate, manganese acetate and a hydrate thereof. Examples of the cobalt salt may include cobalt sulfate, cobalt nitrate, cobalt carbonate and a hydrate thereof.

An aqueous solution may be prepared by mixing the active material metal salts together with a precipitating agent and/or a chelating agent at a ratio satisfying the content or concentration ratio of each metal described with reference to Chemical Formula 1 above. The aqueous solution may be co-precipitated in a reactor to prepare a complex metal salt compound (e.g., an NCM precursor).

The precipitating agent may include an alkaline compound such as sodium hydroxide (NaOH), sodium carbonate (Na₂CO₃), or the like. In this case, a sodium component of the precipitating agent may be contained in the lithium composite oxide.

The chelating agent may include, e.g., aqueous ammonia (e.g., NH₄OH), ammonium carbonate (e.g., NH₃HCO₃), or the like.

Thereafter, a lithium salt compound may be mixed with the composite metal salt compound and reacted through a co-precipitation method to prepare a lithium complex. The lithium salt compound may include, e.g., lithium carbonate, lithium nitrate, lithium acetate, lithium oxide, lithium hydroxide, or the like. These may be used alone or in combination thereof.

The lithium complex may be treated by a first firing to form a lithium composite oxide. The first firing may be performed, e.g., at a temperature from 450 °C to 650 °C in an oxygen-containing atmosphere.

The lithium composite oxide may be added to the aqueous reaction solution. A preliminary cathode active material may be obtained by stirring the lithium composite oxide in the aqueous reaction solution for a predetermined time and then filtering. The sodium-aluminum compound may be adsorbed on the surface of the preliminary cathode active material.

For example, lithium nickel oxide exposed on the surface of lithium composite oxide particles may react with air or moisture during the production and use of the cathode active material, and may be decomposed to generate by-products such as lithium hydroxide (LiOH), lithium carbonate (Li₂CO₃), nickel oxide (NiO), etc. Further, nickel ions exposed to the surface may react with the electrolyte to cause a phase transition in a surface layer portion of a particle, and may transform a crystal structure.

In exemplary embodiments, the water-based reaction solution may be used to a coating by a wet process to remove the by-products from the surface of the lithium composite oxide particle without an additional washing process. Additionally, washing and coating may be simultaneously performed to prevent an increase of a specific surface area caused by a washing process.

The preliminary cathode active material may be thermally treated to form the coating on the surface of the lithium composite oxide.

The coating may be continuously or discontinuously (e.g., as pattern shapes spaced apart from each other) formed on the surface of the lithium composite oxide depending on an amount of the used sodium-aluminum compound. The coating may at least partially cover the surface of the lithium composite oxide.

The thermal treatment may be performed at a temperature from 250 °C to 700 °C. Within the temperature range, a uniform coating may be formed, the coating material may be stabilized, and the coating and the lithium composite oxide may be strongly bonded.

For example, the thermal treatment may be performed at a relatively low temperature from 250 °C to 400 °C. In this case, a coating uniformity of the coating material may be improved. Additionally, excessively deep diffusion of sodium or aluminum from the surface of the positive electrode active material may be prevented due to the relatively low temperature. Accordingly, deterioration of electrical properties due to sodium or aluminum being distributed from the surface of the cathode active material to an excessively deep region may be effectively prevented.

In some embodiments, the thermal treatment may be performed in an inert atmosphere or an oxygen-containing atmosphere. The inert atmosphere may include a nitrogen or argon gas atmosphere. The oxygen-containing atmosphere may include, e.g., an oxidizing atmosphere having an oxygen content of about 20% or more.

In some embodiments, the preliminary cathode active material may be dried before the thermal treatment.

In exemplary embodiments, the drying may be performed at a temperature from 130 °C to 170 °C. In the above temperature range, substantially non-crystallized lithium aluminum hydroxide may be formed. For example, if the drying temperature is higher than 170 °C, crystallization of lithium aluminum hydroxide may occur, and uniformity of the coating may be decreased.

In exemplary embodiments, a boron-containing compound may be added to the aqueous reaction solution to which the lithium composite oxide is added. In this case, the coating may contain boron. The boron component may improve the uniformity of the coating and reduce the surface area of particles.

In example embodiments, the boron-containing compound may include boric acid (H₃BO₃), B(NO₃)₃ or BPO₄. The boron-containing compound may serve, e.g., as a pH adjuster. The boron-containing compound may lower a pH of the reaction aqueous solution to which the lithium composite oxide is added to a range from about 7 to 13. In this case, an aluminum-containing coating material and a boron-containing coating material may be easily precipitated and adsorbed on the surface of the lithium composite oxide.

In some embodiments, the boron-containing compound may be used in an amount from 0.01 wt% to 1 wt% based on a weight of the preliminary cathode active material. Within this range, electrical properties may be maintained while uniformly coating the cathode active material.

In some embodiments, a particle size may be adjusted by pulverizing and classifying the prepared cathode active material.

In some embodiments, the prepared cathode active material may be stabilized by performing a second firing. The second firing may be performed at a temperature from about 600 °C to 800 °C.

A cathode slurry may be prepared by mixing and stirring the cathode active material in a solvent with a binder, a conductive agent and/or a dispersive agent. The cathode slurry may be coated on the cathode current collector 110, and then dried and pressed to form the cathode 130.

The cathode current collector 110 may include stainless-steel, nickel, aluminum, titanium, copper or an alloy thereof. Preferably, aluminum or an alloy thereof may be used.

The binder may include an organic based binder such as a polyvinylidene fluoridehexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive agent may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

In exemplary embodiments, the anode 140 may include an anode current collector 120 and an anode active material layer 125 formed by coating an anode active material on the anode current collector 120.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, silicon (Si)-based compound, tin, etc., may be used.

The amorphous carbon may include a hard carbon, cokes, a mesocarbon microbead (MCMB) fired at a temperature of 1500 °C or less, a mesophase pitch-based carbon fiber (MPCF), etc. The crystalline carbon may include a graphite-based material such as natural graphite, graphitized cokes, graphitized MCMB, graphitized MPCF, etc. The lithium alloy may further include aluminum, zinc, bismuth, cadmium, antimony, silicon, lead, tin, gallium, indium, etc.

The anode current collector 120 may include, e.g., gold, stainless steel, nickel, aluminum, titanium, copper or an alloy thereof, preferably may include copper or a copper alloy.

In some embodiments, a slurry may be prepared by mixing and stirring the anode active material with a binder, a conductive agent and/or a dispersive agent in a solvent. The slurry may be coated on the anode current collector 120, and then dried and pressed to form the anode 140.

The binder and the conductive agent substantially the same as or similar to those mentioned above may also be used in the anode. In some embodiments, the binder for forming the anode may include, e.g., an aqueous binder such as styrene-butadiene rubber (SBR) for compatibility with the carbon-based active material, and may be used together with a thickener such as carboxymethyl cellulose (CMC).

The separation layer 150 may be interposed between the cathode 130 and the anode 140. The separation layer 150 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 150 may also include a non-woven fabric formed from a glass fiber with a high melting point, a polyethylene terephthalate fiber, or the like.

In some embodiments, an area and/or a volume of the anode 140 (e.g., a contact area with the separation layer 150) may be greater than that of the cathode 130. Thus, lithium ions generated from the cathode 130 may be easily transferred to the anode 140 without a loss by, e.g., precipitation or sedimentation. Thus, improvement of power and stability may be efficiently realized through a combination with the above-described composite hydroxide particle or the cathode active material.

In exemplary embodiments, an electrode cell may be defined by the cathode 130, the anode 130 and the separation layer 150, and a plurality of the electrode cells may be stacked to form an electrode assembly that may have e.g., a jelly roll shape. For example, the electrode assembly may be formed by winding, laminating or folding the separation layer 150.

The electrode assembly may be accommodated together with an electrolyte in an outer case 160 to define a lithium secondary battery. In exemplary embodiments, a non-aqueous electrolyte may be used as the electrolyte.

For example, the non-aqueous electrolyte solution may include a lithium salt and an organic solvent. The lithium salt commonly used in the electrolyte for the lithium secondary battery may be used, and may be represented by Li⁺X⁻. An anion of the lithium salt X⁻ may include, e.g., F, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

Electrode tabs may protrude from the cathode current collector 110 and the anode electrode current collector 120 included in each electrode cell to one side of the outer case 170. The electrode tabs may be welded together with the one side of the outer case 170 to form an electrode lead extending or exposed to an outside of the outer case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Example

NaAlO₂ was dissolved in water. 100 g of a lithium composite oxide (Li_{1.02}Ni_{0.8}Co_{0.1}Mn_{0.1}O₂) was added to the NaAlO₂ solution, and an aqueous H₃BO₃ solution was dropped for 10 minutes while stirring, and then filtered. A content of NaAlO₂ was 0.9 wt% relative to a weight of the lithium composite oxide, and the content of H₃BO₃ was 1.7wt% relative to the weight of the lithium composite oxide.

The filtered lithium composite oxide was dried at 150 °C for 24 hours. The dried lithium composite oxide was introduced into a kiln, and the temperature was raised to 300°C at 2°C/min and maintained for 10 hours. Oxygen was continuously introduced into the kiln at a flow rate of 10 mL/min. The fired lithium composite oxide was pulverized and classified to obtain a cathode active material.

### Comparative Example 1

A cathode active material was prepared by the same method as that in Example 1 except that 100 g of the complex oxide (Li_{1.02}Ni_{0.8}Co_{0.1}Mn_{0.1}O₂) was added to ultrapure water (DIW) without using NaAlO₂ and H₃BO₃, stirred for 10 minutes, and then filtered.

### Comparative Example 2

A cathode active material was prepared by the same method as that in Example 1 except that Al(NO)₃ was used instead of NaAlO₂.

### Experimental Example 1: Surface Analysis

A surface of the cathode active material of Example was analyzed by SEM to obtain an image as shown in FIG. 2

Referring to FIG. 2, a uniform coating entirely covering the surface of the lithium composite oxide particle was achieved.

### Experimental Example 2: ICP etching analysis

0.05 g of the cathode active material of Example and Comparative Examples were put in a 15 mL PP tube, and then 10 ml of a 20% water solution (80% anhydrous ethanol) was added and mixed by shaking.

Na component was eluted through a roller mixer (STUART, SRT9D) for 5 minutes. and then a solid content was removed using 0.45 µm PTFE Syringe filter.

While changing the elution time to 10 minutes, 15 minutes, 20 minutes, 25 minutes and 30 minutes, the Na component was eluted to prepare six elution solutions. The elution solutions were heated in a heating block (SCP Science, DigiPREP Jr) to volatilize ethanol and water components.

About 10 drops of concentrated nitric acid was added to the dried sample, dissolved by heating, and then diluted to 10 ml with ultrapure water to prepare a diluted sample.

The diluted sample was analyzed using ICP-OES (Agilent Technologies, ICP-OES 720) equipment to measure Na content. The results are shown in Table 1 below.

**[Table 1]**

| Time (min) | Example 1 | Comparative Example 1 | Comparative Example 2 |
|---|---|---|---|
| 5 | 301.8 | 90.5 | 43.8 |
| 10 | 346.7 | 95.7 | 45.9 |
| 15 | 373.2 | 98.4 | 48.2 |
| 20 | 388.1 | 100.6 | 50.0 |
| 25 | 398.4 | 102.6 | 51.8 |
| 30 | 400.5 | 102.7 | 52.4 |

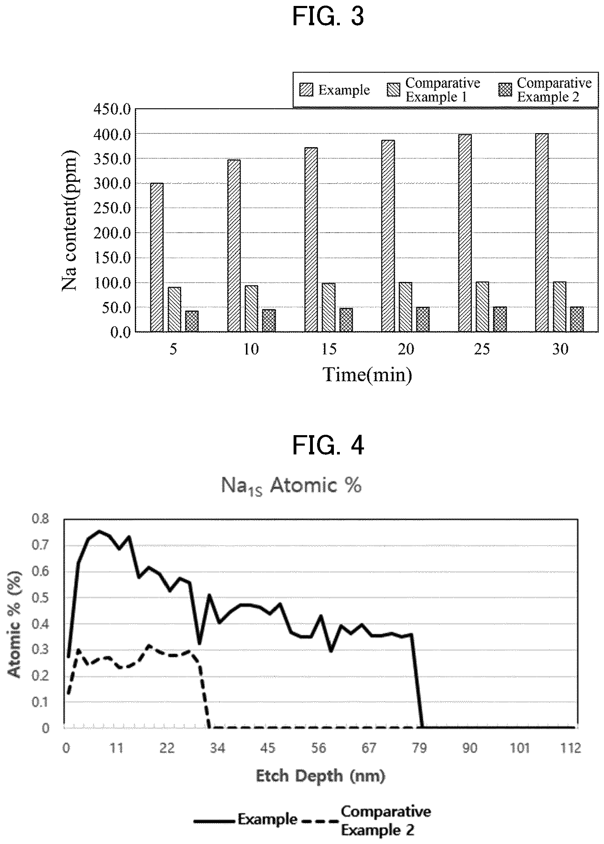

The data in Table 1 is shown in FIG. 3. Referring to Table 1 and FIG. 3, in the cathode active materials of Comparative Examples, Na components were concentrated on the surface and most (about 85% or more) of the Na components were eluted by the elution for 5 minutes.

However, in the cathode active material of Example, an amount of Na elution gradually increased according to the elution time, and Na was diffused to an inside of the cathode active material particle.

### Experimental Example 3: X-ray Photoelectron Spectrometer (XPS) Surface Analysis

The surface components of the cathode active materials of Example and Comparative Example 2 were analyzed through ESCALAB 250Xi manufactured by ThermoScientific Co., Ltd.

XPS measurement conditions were adjusted as follows.
1) X-ray type: Source - Al Ka, Beam size 650 um
2) Depth profile conditions: Etch cycle 10s, Total etch levels 51 times
3) Al2p, Na1s spectrum analysis conditions at depth
   - Dwell time: 200 ms, Scan count: 30 times
   - Pass energy: 200eV, energy step: 0.1eV

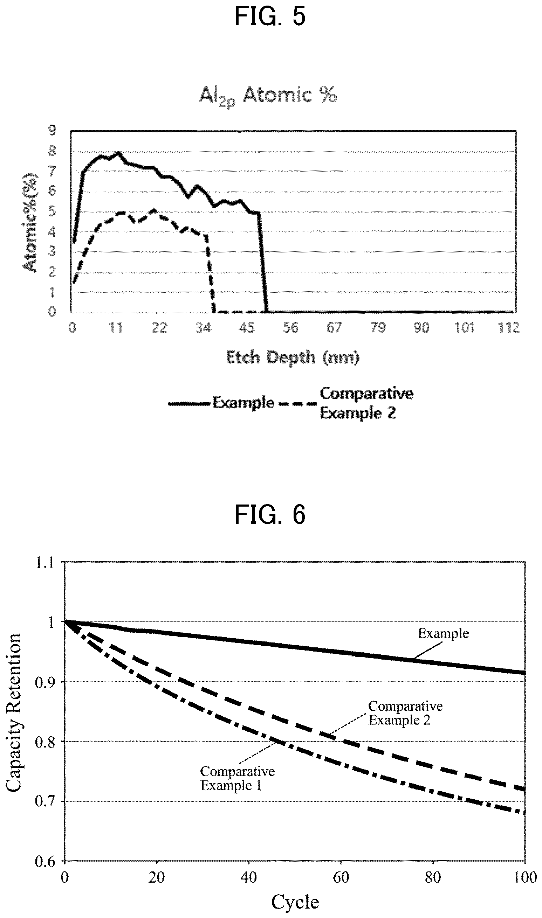

Atomic percents of Na and Al according to the XPS etching depth (surface: 0 nm) are shown in the graphs of FIGS. 4 and 5 .

Referring to FIGS. 4 and 5, in the cathode active material of Comparative Example 2, Na was distributed to a depth of about 33 nm from the surface, and Al was distributed to a depth of about 37 m.

In the cathode active material of Example, Na was diffused/distributed even at a depth greater than about 33 nm, and Al was diffused/distributed to a depth greater than about 37 nm.

### Experimental Example 4: Life-span evaluation of lithium secondary battery

### 1. Preparation of lithium secondary battery

Coin-type secondary batteries were manufactured using the cathode active materials of Example and Comparative Examples.

Specifically, the cathode active material, Denka Black as a conductive agent, PVDF as a binder were mixed in a weight ratio of 94: 3: 3 to prepare a cathode mixture. The cathode mixture was coated on an aluminum current collector, and then dried and pressed to form a cathode. An electrode density after the pressing was 3.5 g/cc or more.

93 wt% of natural graphite as an anode active material, 5 wt% of KS6 as a flake type conductive agent, 1 wt% of styrene-butadiene rubber (SBR) as a binder, and 1 wt% of carboxymethyl cellulose (CMC) as a thickener was mixed to from an anode slurry. The anode slurry was coated on a copper substrate, dried and pressed to prepare an anode.

The cathode and the anode obtained as described above were notched with a proper size and stacked, and a separator (polyethylene, thickness: 25 µm) was interposed between the cathode and the anode to form an electrode cell. Each tab portion of the cathode and the anode was welded.

The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by dissolving 1M LiPF₆ in a mixed solvent of EC/EMC/DEC (25/45/30; volume ratio), and then 1 wt% of vinylene carbonate, 0.5 wt% of 1,3-propensultone (PRS), and 0.5 wt% of lithium bis(oxalato) borate (LiBOB) were added.

### 2. Life-span evaluation

An initial discharge capacity was measured by performing charging (CC/CV 1C 4.3V 0.05C CUT-OFF) and discharging (CC 1C 3V CUT-OFF) at room temperature for the secondary batteries according to Example and Comparative Examples.

A capacity retention ratio was calculated by dividing a discharge capacity according to the number of the charging/discharging cycles by the initial discharge capacity while repeating the charging/discharging. The result is shown in FIG. 6.

Referring to FIG. 6, in the secondary battery of Example, the capacity was maintained at about 90% or more even after 100 cycles. However, in the secondary batteries of Comparative Examples, the capacity decreased to about 72% or less after 100 cycles.

## Claims

1. A cathode active material for a lithium secondary battery, comprising:
a lithium composite oxide containing sodium; and
a coating formed on the surface of the lithium composite oxide, the coating containing sodium and aluminum,
wherein sodium is distributed to a depth of 35 nm or more from a surface of the cathode active material.

2. The cathode active material for a lithium secondary battery according to claim 1, wherein an amount of sodium contained in the coating is greater than an amount of sodium contained in the lithium composite oxide.

3. The cathode active material for a lithium secondary battery according to claim 1, wherein sodium is distributed to a depth of 35 nm to 200 nm from the surface of the cathode active material.

4. The cathode active material for a lithium secondary battery according to claim 1, wherein the coating further contains boron.

5. The cathode active material for a lithium secondary battery according to claim 1, wherein the coating comprises an aluminum-containing compound including at least one of an aluminum-containing oxide, an aluminum-containing hydroxide or a lithium-aluminum compound.

6. The cathode active material for a lithium secondary battery according to claim 5, wherein the aluminum-containing compound comprises at least one selected from the group consisting of AlO, Al₂O, Al₂O₃, LiAlO₂, LiAlB₄, LiAlB₂O₅, Al(OH)₃, LiAlH₄ and LiAlOH.

7. The cathode active material for a lithium secondary battery according to claim 5, wherein the coating further comprises a boron-containing oxide.

8. The cathode active material for a lithium secondary battery according to claim 7, wherein the boron-containing oxide includes LiBO₂, LiB₃O₅ or Li₂B₄O₇.

9. The cathode active material for a lithium secondary battery according to claim 1, wherein the coating is discontinuously formed on the surface of the lithium composite oxide.

10. The cathode active material for a lithium secondary battery according to claim 1, wherein the lithium composite oxide includes nickel, and a mole fraction of nickel in the lithium composite oxide is 0.6 or more among elements other than lithium and oxygen.

11. The cathode active material for a lithium secondary battery according to claim 1, wherein the cathode active material includes aluminum, and aluminum is distributed to a depth of 37 nm or more from the surface of the cathode active material.

12. The cathode active material for a lithium secondary battery according to claim 11, wherein aluminum is distributed to a depth of 37 nm to 200 nm from the surface of the cathode active material.

13. A method of manufacturing a cathode active material for a lithium secondary battery, comprising:
preparing an aqueous reaction solution containing a sodium-aluminum compound; and
wet-coating a lithium composite oxide using the aqueous reaction solution.

14. The method of claim 13, wherein the wet-coating comprises:
forming a preliminary cathode active material by immersing a surface of the lithium composite oxide in the aqueous reaction solution; and
thermally treating the preliminary cathode active material at a temperature from 250°C to 700°C.

15. The method of claim 14, wherein forming the preliminary cathode active material comprises adding a boron-containing compound to the aqueous reaction solution.
